# FASCICULE DE BREVET EUROPEEN

(11) **EP 0 554 170 B1**
(45) Date de publication et mention de la délivrance du brevet: **02.01.1997**
(21) Numéro de dépôt: 93400199.1
(22) Date de dépôt: 27.01.1993
(51) Int. Cl.: H02P 7/20, B60H 1/00

(54) **Dispositif électromécanique à circuit résistif variable pour la commande d'une charge, notamment d'un moteur électrique**
Mechanische Vorrichtung mit veränderlicher resistiver Schaltung zur Steuerung einer Last, insbesondere eines Elektromotors
Mechanical device having variable resistive circuit to control a load, in particular an electric motor

(30) Priorité: 31.01.1992 FR 9201108
(43) Date de publication de la demande: 04.08.1993
(73) Titulaire: VALEO CLIMATISATION, 78321 La Verrière (FR)
(72) Inventeur: Dauvergne, Jean, F-95470 Fosses (FR)
(74) Mandataire: Gamonal, Didier

(56) Documents cités:
- DE-C- 395 051
- GB-A- 156 443
- PATENT ABSTRACTS OF JAPAN vol. 11, no. 34 (M-558)(2481) 31 Janvier 1987 ; & JP-A-61 202 915

## Description

L'invention concerne un dispositif électromécanique à circuit résistif variable pour la commande d'une charge.

Elle s'applique notamment au réglage de la vitesse d'un moteur électrique, en particulier d'un moteur d'entraînement d'un ventilateur dans une installation de chauffage-ventilation et/ou de climatisation d'un véhicule automobile.

On connaît déjà (voir JP-A-61 202 915) des dispositifs électromécaniques de ce type qui comportent une première connexion reliée à une source de tension, une deuxième connexion propre à être reliée à une charge alimentée par ladite source de tension et des moyens de commande de l'intensité du courant traversant la charge, ces moyens de commande comportant un circuit résistif variable connecté entre les première et deuxième connexions, ainsi que des moyens mécaniques propres à faire varier la résistance du circuit résistif.

De cette façon, on peut faire varier l'intensité du courant traversant la charge et, dans le cas où cette charge est un moteur, ajuster la vitesse de ce dernier.

Dans le cas d'un dispositif de ce type appliqué au réglage de la vitesse du moteur d'un ventilateur d'un véhicule automobile, les moyens de commande comportent généralement un commutateur à plusieurs positions possédant un doigt de commande propre à coopérer avec un nombre déterminé de plots dont chacun est relié au moteur par une liaison électrique comportant un fil électrique et une résistance de valeur définie.

En agissant sur le commutateur, on peut faire coopérer le doigt avec un plot choisi, ce qui permet d'établir une liaison électrique avec le moteur au travers de la résistance correspondante.

De cette manière, on peut donner à la vitesse du moteur une valeur choisie parmi un nombre limité de valeurs dont chacune est définie par une résistance appropriée. Par exemple, on peut ajuster la vitesse du moteur entre une vitesse nulle, une petite vitesse, une moyenne vitesse et une grande vitesse.

Dans les dispositifs connus de ce type, il faut prévoir une multiplicité de liaisons électriques, donc un grand nombre de fils électriques entre le commutateur et le moteur du ventilateur.

Ceci oblige à avoir une grande longueur de fils et peut conduire à des interversions de connexions à l'occasion d'un démontage et remontage de l'installation correspondante.

De plus, étant donné que le commutateur est situé sur la planche de bord du véhicule, tandis que le moteur du ventilateur est logé dans un boîtier situé à distance de cette planche de bord, les fils électriques forment un faisceau de grande longueur dont il convient d'assurer le passage entre la planche de bord et le boîtier du ventilateur.

Enfin, les plots ou contacts situés sur la planche de bord ne sont pas refroidis et peuvent se détériorer ou détériorer leur environnement sous l'effet de la chaleur dégagée.

L'invention a notamment pour but de remédier aux inconvénients précités des dispositifs connus.

Elle propose, à cet effet, un dispositif électromécanique du type défini en introduction, dans lequel le circuit résistif comporte une pluralité de branches montées en parallèle entre la première et la deuxième connexions et comportant chacune une résistance en série avec un interrupteur possédant un état de contact initial, ouvert ou fermé, et dans lequel les moyens mécaniques comportent un chariot déplaçable en translation entre plusieurs positions prédéterminées dans chacune desquelles ce chariot est propre à coopérer avec l'un au moins des interrupteurs pour modifier son état de contact initial.

On réalise ainsi un dispositif électromécanique de structure particulièrement compacte qui peut être implanté à proximité d'une charge, notamment d'un moteur, et cela sans qu'il soit nécessaire de prévoir un faisceau de fils électriques comme dans la technique antérieure.

Il suffit alors de prévoir simplement des moyens pour commander à distance le déplacement en translation du chariot qui fait partie du dispositif.

Dans une première variante de réalisation de l'invention, chaque interrupteur possède un état de contact initial ouvert, tandis que le chariot est propre à coopérer avec chaque interrupteur pour l'amener dans un état de contact fermé.

Dans une forme de réalisation préférée, chaque interrupteur comporte deux contacts, à distance l'un de l'autre, et le chariot est au moins en partie conducteur de l'électricité pour assurer une jonction électrique entre les deux contacts d'un interrupteur lorsqu'il est en position de coopération avec cet interrupteur.

Dans cette première variante de réalisation de l'invention, le chariot est propre à occuper une position neutre ou inactive dans laquelle il ne coopère avec aucun interrupteur, si bien qu'aucun courant ne traverse la charge. Il peut en outre occuper plusieurs positions actives en chacune desquelles il coopère à chaque fois avec un seul interrupteur pour assurer une liaison électrique. En ce cas, la charge est traversée par un courant dont l'intensité est définie par la valeur de la résistance montée en série avec cet interrupteur.

Dans une seconde variante de réalisation de l'invention, chaque interrupteur possède un état de contact initial fermé et le chariot est propre à coopérer avec chaque interrupteur pour l'amener dans un état de contact ouvert.

Dans une forme de réalisation préférée, chaque interrupteur comporte deux contacts rappelés élastiquement l'un vers l'autre pour définir ledit état de contact initial, tandis que le chariot est au moins en partie isolant pour éloigner et isoler électriquement les deux contacts d'un interrupteur lorsqu'il se trouve en position de coopération avec cet interrupteur.

Dans cette seconde variante, le chariot possède un corps de configuration allongé s'étendant dans la direction de translation du chariot, ce dernier étant propre à occuper une position neutre ou inactive en laquelle il coopère simultanément avec les contacts respectifs de chaque interrupteur pour les amener dans un état de contact ouvert. Il en résulte ainsi qu'aucun courant ne traverse la charge.

Le chariot peut en outre occuper plusieurs positions actives en chacune desquelles il coopère à chaque fois avec l'un au moins des interrupteurs pour l'amener dans un état de contact ouvert, tout en laissant au moins un interrupteur dans un état de contact fermé.

Dans les deux variantes de réalisation précitées, les interrupteurs sont avantageusement disposés alignés et espacés les uns des autres dans une direction correspondant à la direction de translation du chariot.

Selon une autre caractéristique de l'invention, le dispositif comprend des moyens de commande à distance de déplacement du chariot. Ceux-ci peuvent être constitués par exemple par un câble coulissant dans une gaine.

Lorsque le dispositif de l'invention est appliqué à la commande d'un moteur électrique, par exemple d'un ventilateur d'une installation de chauffage-ventilation et/ou de climatisation d'un véhicule automobile, il suffit alors de prévoir une commande à distance entre la planche de bord et le boîtier qui loge le ventilateur.

Dans cette disposition, les contacts électriques peuvent être refroidis par le flux d'air circulant dans l'installation.

Dans la description qui suit, faite seulement à titre d'exemple, on se réfère aux dessins annexés, sur lesquels :
- la figure 1 est une représentation schématique d'un dispositif électromécanique conforme à la première variante précitée, et intégré à un circuit de commande d'un moteur ;
- la figure 2 est une représentation schématique d'un dispositif électromécanique conforme à la seconde variante précitée, et intégré à un circuit de commande d'un moteur, le chariot étant représenté dans une position neutre ;
- les figures 3 et 4 représentent le circuit de la figure 2 dans deux autres positions différentes ;
- la figure 5 est une vue de côté d'un dispositif électromécanique selon la seconde variante ;
- la figure 6 est une vue de dessus du dispositif de la figure 5 ; et
- la figure 7 est une vue de côté du dispositif de la figure 5.

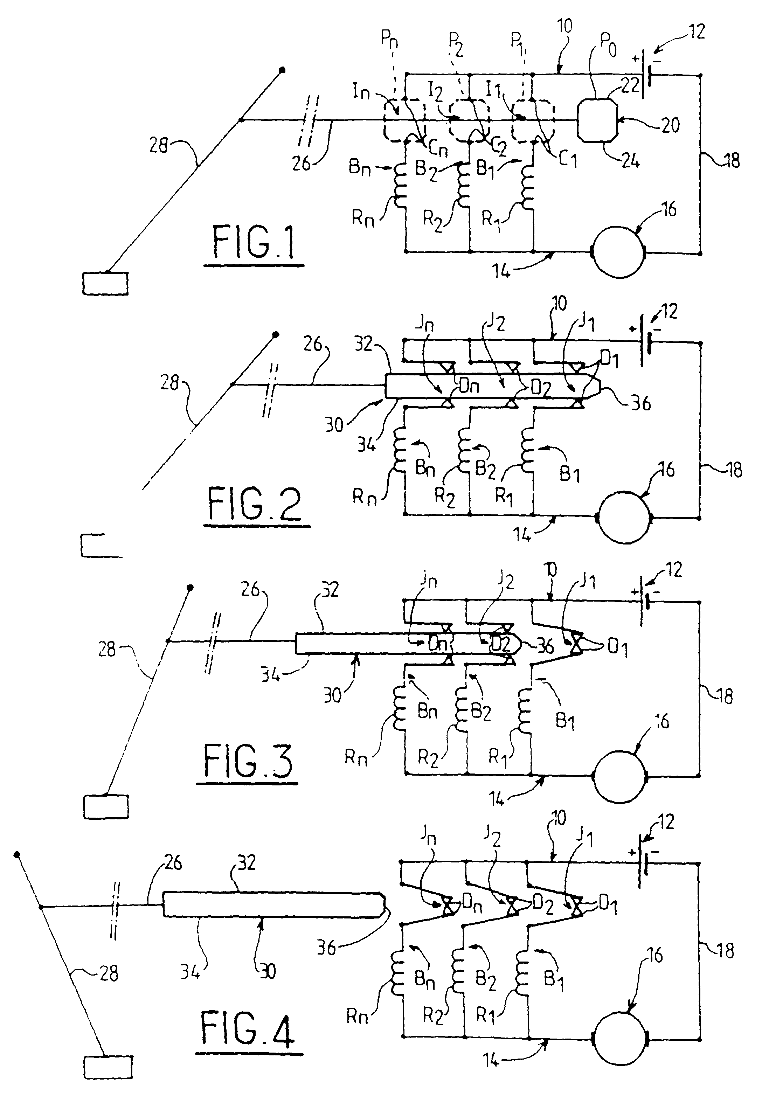

Le dispositif électromécanique représenté à la figure 1 comporte une première connexion 10 reliée au pôle positif d'une source de tension 12, et une deuxième connexion 14 propre à être reliée à une charge 16 alimentée par la source de tension 12 au moyen d'une liaison électrique 18 connectée au pôle négatif de cette source de tension.

A titre d'exemple, la source de tension 12 peut être une batterie d'accumulateur d'un véhicule automobile et la charge 16 un moteur électrique, par exemple d'un ventilateur faisant partie d'une installation de chauffage-ventilation et/ou de climatisation du véhicule automobile.

Le dispositif électromécanique de la figure 1 comprend en outre des moyens de commande qui comportent tout d'abord un circuit résistif variable. Ce circuit résistif comprend une pluralité de branches B₁, B₂, ..., et Bₙ montées en parallèle entre les connexions 10 et 14. La branche B₁ comporte une résistance R₁ en série avec un interrupteur I₁, la branche B₂ une résistance R₂ en série un interrupteur I₂, etc, et la branche Bₙ une résistance Rₙ en série avec un interrupteur Iₙ.

Dans l'exemple, l'interrupteur I₁ comporte deux contacts C₁ à distance l'un de l'autre, l'interrupteur I₂ deux contacts C₂ à distance l'un de l'autre, etc, et l'interrupteur Iₙ deux contacts Cₙ à distance l'un de l'autre. Dans ces conditions, on comprendra que chacun des interrupteurs comporte un état initial ouvert n'autorisant aucun passage de courant dans la branche correspondante. Les interrupteurs I₁, I₂, ..., Iₙ sont disposés alignés et espacés les uns les autres dans une direction déterminée.

Les moyens de commande du dispositif électromécanique de la figure 1 comportent en outre des moyens mécaniques propres à faire varier la résistance du circuit résistif. Dans l'exemple, ces moyens mécaniques comprennent un chariot 20 déplaçable en translation linéaire dans la direction d'alignement des interrupteurs I₁ à Iₙ.

Le chariot 20 est au moins en partie conducteur de l'électricité et comporte deux faces de contact opposées 22 et 24 reliées électriquement entre elles. La distance entre les faces de contact 22 et 24 correspond sensiblement à la distance séparant les deux contacts C₁ de l'interrupteur I₁, les deux contacts C₂ de l'interrupteur I₂ et les deux contacts Cₙ de l'interrupteur Iₙ.

Le chariot 20 peut être déplacé en translation au moyen d'une commande à distance qui, dans l'exemple, est constituée d'un câble 26 actionné par un levier 28. Le chariot 20 peut occuper plusieurs positions différentes et notamment une position neutre ou inactive P₀ (comme représentée en trait plein sur la figure 1), dans laquelle le chariot ne coopère avec aucun des interrupteurs I₁ à Iₙ. Dans cette position, aucun courant ne traverse la charge 16.

Le chariot peut être déplacé en plusieurs positions différentes P₁, P₂, ..., Pₙ dans laquelle il coopère respectivement avec l'interrupteur I₁, I₂, ..., Iₙ.

Lorsque le chariot coopère avec l'un des interrupteurs, il assure une liaison électrique entre les deux contacts de l'interrupteur et permet ainsi un passage de courant au travers de la branche correspondante. Ainsi, lorsque l'interrupteur est dans la position P₁, le courant traverse la branche B₁ et alimente la charge 16 au travers de la résistance R₁.

Si la charge 16 est un moteur électrique, celui-ci tourne à une vitesse déterminée en fonction de la valeur de la résistance R₁.

Lorsque le chariot est ensuite déplacé dans une autre position, un passage de courant est établi dans la branche correspondante, ce qui permet d'obtenir un courant d'une intensité différente et, par conséquent, une vitesse du moteur différente.

On comprendra ainsi que le dispositif électromécanique peut être implanté à proximité immédiate de la charge 16 et que la commande du circuit résistif peut se faire à distance au travers du câble 26 ou de tout autre moyen mécanique équivalent.

Dans le cas d'un véhicule automobile, il est particulièrement avantageux d'utiliser un câble d'actionnement sous gaine, le levier 24 étant par exemple constitué d'un bouton rotatif placé au niveau de la planche de bord.

Dans la forme de réalisation des figures 2 à 4, auxquelles on se réfère maintenant, le dispositif électromécanique comporte toujours une première connexion 10 reliée à une source de tension 12 et une deuxième connexion 14 propre à être reliée à une charge 16 alimentée par une source de tension 12.

Dans cette seconde variante, le circuit résistif comporte également une pluralité de branches B₁, B₂, ..., Bₙ montées en parallèle entre les connexions 10 et 14. De plus, chacune des branches B₁, B₂, ..., Bₙ comporte une résistance R₁, R₂, ..., Rₙ, en série avec un interrupteur J₁, J₂, Jₙ.

Toutefois, à la différence des interrupteurs I₁, I₂, ..., Iₙ de la figure 1, les interrupteurs J₁, J₂, Jₙ possèdent chacun un état de contact initial fermé.

Dans l'exemple, et comme on le voit mieux sur la figure 4, l'interrupteur J₁ comporte deux contacts D₁ rappelés élastiquement l'un vers l'autre, l'interrupteur J₂ deux contacts D₂ rappelés élastiquement l'un vers l'autre et l'interrupteur Jₙ deux contacts Dₙ rappelés élastiquement l'un vers l'autre. Les interrupteurs J₁, J₂, ..., Jₙ sont alignés et espacés les uns les autres dans une direction définie.

Le dispositif représenté aux figures 2 à 4 comprend en outre un chariot 30 déplaçable en translation linéaire dans la direction d'alignement des contacts J₁, J₂, ..., Jₙ. Ce chariot possède un corps isolant de configuration allongée dans sa direction de translation, ayant une longueur suffisante pour pouvoir amener simultanément tous les interrupteurs J₁, J₂, ..., Jₙ dans un état ouvert (figure 2).

Le chariot 30 comporte deux faces opposées 32 et 34 s'étendant parallèlement à la direction de translation du chariot et propres à coopérer avec les contacts des interrupteurs J₁, J₂, ..., Jₙ, ainsi qu'une tête chanfreinée 36 facilitant l'écartement des contacts des interrupteurs.

Dans la position neutre ou inactive P₀ de la figure 2, le chariot 30 coopère simultanément avec l'ensemble des interrupteurs J₁, J₂, ..., Jₙ pour écarter leurs contacts respectifs D₁, D₂, ..., Dₙ et les mettre tous à l'état ouvert. Par conséquent, dans cette position, aucun courant ne traverse la charge 16.

Le chariot 30 est également commandé à distance par un câble 26 ou analogue actionné par un levier 24. Dans la position P₁ représentée à la figure 3, le chariot 30 a été déplacé légèrement en translation, si bien qu'il ne coopère pas avec l'interrupteur J₁ qui se trouve ainsi dans son état initial fermé et qu'il coopère avec les autres interrupteurs J₂, ..., Jₙ qui se trouvent alors dans un état ouvert.

Par conséquent, dans la configuration de la figure 3, la charge 16 est traversée par un courant de sortie dont l'intensité est définie par la valeur de la résistance R₁.

Le chariot 30 peut prendre encore d'autres positions et notamment la position Pₙ de la figure 4 dans laquelle il ne coopère avec aucun des interrupteurs J₁, J₂, ..., Jₙ, ces derniers étant tous dans leur état initial fermé. Il en résulte que le circuit résistif ainsi obtenu possède une résistance R telle que 1/R = 1/R₁ + 1/R₂ + ... + 1/Rₙ.

Dans le cas particulier d'un dispositif électromécanique appliqué à un moteur de ventilateur pour véhicule automobile, le nombre de vitesses différentes à prévoir est généralement de trois ou quatre.

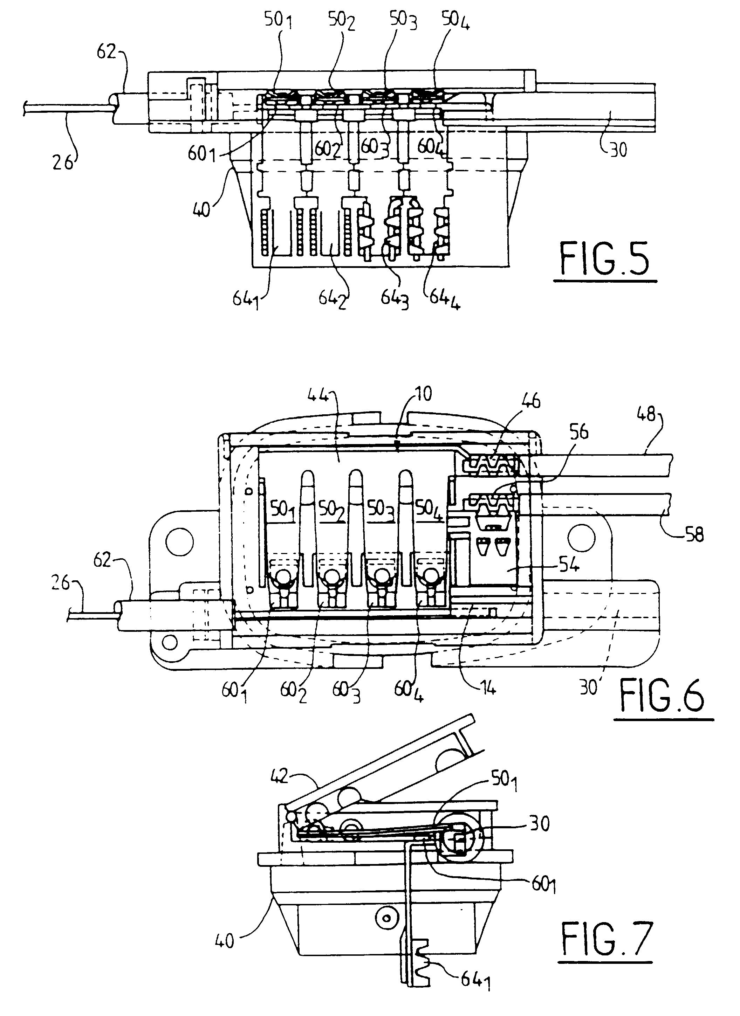

On se réfère maintenant aux figures 5 à 7 montrant une forme de réalisation pratique d'un dispositif selon la variante des figures 2 à 4.

Le dispositif 38 comporte un bloc isolant 40 muni d'un couvercle pivotant 42 (figure 7).

Le bloc 40 reçoit une première connexion 10 constituée d'une barrette 44 en un matériau métallique, par exemple en cuivre, et munie d'une cosse 46 pour le raccordement d'un fil électrique 48 susceptible d'être relié au pôle positif d'une source de tension. De la barrette 44, dépendent, dans l'exemple, quatre languettes élastiques parallèles 50₁, 50₂, 50₃, 50₄.

Le bloc 40 reçoit en outre une deuxième connexion 14 réalisée sous la forme d'une barrette allongée 54 munie d'une cosse 56 de raccordement à un fil électrique 58 propre à être connecté au pôle négatif de la source de tension. La barrette 54 possède des contacts 60₁, 60₂, 60₃, 60₄, susceptibles de coopérer respectivement avec les contact 50₁, 50₂, 50₃, 50₄ de la connexion 10.

Du fait de l'élasticité des languettes de la connexion 10, les contacts 50₁ et 60₁ sont normalement rappelés l'un vers l'autre pour former un interrupteur J₁ à l'état initial fermé, et il en est de même pour les autres paires de contacts.

Sur les figures 5 à 7, on distingue également le chariot 30 qui est déplaçable en translation au moyen d'un câble 26 coulissant dans une gaine 62.

De chacun des contacts 60₁, 60₂, 60₃ et 60₄, dépendent des fiches 64₁, 64₂, 64₃, 64₄ pour le raccordement à des résistances R₁, R₂, R₃ et R₄ qui n'ont pas été représentées pour simplifier le dessin.

On comprendra que le couvercle 42 est destiné à permettre le montage du dispositif et qu'il est ensuite pivoté et clipsé pour assurer le maintien en position des pièces constitutives.

Le dispositif représenté aux figures 5 à 7 peut donc être réalisé de façon particulièrement compacte et être disposée à proximité de la charge à laquelle il doit être associé.

Dans le cas particulier où cette charge est un moteur d'un ventilateur de véhicule automobile, il est facile d'assurer la commande à distance du dispositif électromécanique grâce au câble 26 et à sa gaine 62 qu'il convient alors de disposer entre le moteur du ventilateur et une commande appropriée disposée sur la planche de bord du véhicule.

## Revendications

1. Dispositif électromécanique comportant une première connexion (10) reliée à une source de tension (12), une deuxième connexion (14) propre à être reliée à une charge (16) alimentée par ladite source de tension et des moyens de commande de l'intensité du courant traversant la charge, ces moyens de commande comportant un circuit résistif variable connecté entre les première et deuxième connexions et des moyens mécaniques propres à faire varier la résistance du circuit résistif, caractérisé en ce que le circuit résistif comporte une pluralité de branches (B₁, B₂, ..., Bₙ) montées en parallèle entre la première connexion (10) et la deuxième connexion (14) et comportant chacune une résistance (R₁, R₂, ..., Rₙ) en série avec un interrupteur (I₁, I₂, ..., Iₙ ; J₁, J₂, ..., Jₙ) possédant un état de contact initial, ouvert ou fermé, et en ce que les moyens mécaniques comportent un chariot (20;30) déplaçable en translation entre plusieurs positions prédéterminées, dans chacune desquelles ce chariot est propre à coopérer avec l'un au moins des interrupteurs pour modifier son état de contact initial.

2. Dispositif selon la revendication 1, caractérisé en ce que chaque interrupteur (I₁, I₂, ..., Iₙ) possède un état de contact initial ouvert et en ce que le chariot (20) est propre à coopérer avec chaque interrupteur pour l'amener dans un état de contact fermé.

3. Dispositif selon la revendication 2, caractérisé en ce que chaque interrupteur (I₁, I₂, ..., Iₙ) comporte deux contacts (C₁, C₂, ..., Cₙ) à distance l'un de l'autre et en ce que le chariot (20) est au moins en partie conducteur de l'électricité pour assurer une jonction électrique entre les deux contacts d'un interrupteur lorsqu'il est en position de coopération avec cet interrupteur.

4. Dispositif selon l'une des revendications 2 et 3, caractérisé en ce que le chariot (20) est propre à occuper une position neutre ou inactive (P₀) dans laquelle il ne coopère avec aucun interrupteur et des positions actives (P₁, P₂, ..., Pₙ) en chacune desquelles il coopère à chaque fois avec un seul interrupteur.

5. Dispositif selon la revendication 1, caractérisé en ce que chaque interrupteur (J₁, J₂, ..., Jₙ) possède un état de contact initial fermé et en ce que le chariot (30) est propre à coopérer avec chaque interrupteur pour l'amener dans un état de contact ouvert.

6. Dispositif selon la revendication 5, caractérisé en ce que chaque interrupteur (J₁, J₂, ..., Jₙ) comporte deux contacts (D₁, D₂, ..., Dₙ) rappelés élastiquement l'un vers l'autre pour définir ledit état de contact initial fermé et en ce que le chariot (30) est au moins en partie isolant pour éloigner et isoler électriquement les deux contacts d'un interrupteur lorsqu'il se trouve en position de coopération avec cet interrupteur.

7. Dispositif selon la revendication 6, caractérisé en ce que le chariot (30) possède un corps de configuration allongée, s'étendant dans la direction de translation du chariot et en ce que ce chariot est propre à occuper une position neutre ou inactive (P₀) en laquelle il coopère simultanément avec les contacts respectifs de chaque interrupteur (J₁, J₂, ..., Jₙ) pour les amener dans un état de contact ouvert et des positions actives (P₁, ..., Pₙ) en chacune desquelles il coopère à chaque fois avec l'un au moins des interrupteurs pour l'amener dans un état de contact ouvert, tout en laissant au moins un interrupteur dans un état de contact fermé.

8. Dispositif selon l'une des revendications 1 à 7, caractérisé en ce que les interrupteurs (I₁, I₂, ..., Iₙ ; J₁, J₂, ..., Jₙ) sont disposés alignés et espacés les uns des autres dans une direction correspondant à la direction de translation du chariot.

9. Dispositif selon l'une des revendications 1 à 8, caractérisé en ce qu'il comprend des moyens (26;28) de commande à distance du déplacement du chariot (20;30).

10. Dispositif selon la revendication 9, caractérisé en ce que les moyens de commande à distance comprennent un câble (26) coulissant dans une gaine (62).

## Patentansprüche

1. Mechanische Vorrichtung, die einen ersten Anschluß (10), der mit einer Spannungsquelle (12) verbunden ist, einen zweiten Anschluß (14), der mit einer durch die besagte Spannungsquelle gespeisten Last verbunden werden kann, und Steuermittel für die Stromstärke des durch die Last fließenden Stroms umfaßt, wobei diese Steuermittel eine veränderliche resistive Schaltung, die zwischen dem ersten und zweiten Anschluß angeschlossen ist, sowie mechanische Mittel umfassen, um den Widerstand der resistiven Schaltung zu verändern, **dadurch gekennzeichnet,** daß die resistive Schaltung eine Mehrzahl von Strängen (B₁, B₂, ..., Bₙ) umfaßt, die zwischen dem ersten Anschluß (10) und dem zweiten Anschluß (14) parallel geschaltet sind und die jeweils einen Widerstand (R₁, R₂, ..., Rₙ) umfassen, der mit einem Schalter (I₁, I₂, ..., Iₙ; J₁, J₂, ..., Jₙ)) in Reihe geschaltet ist, der einen geöffneten oder geschlossenen Grundkontaktzustand besitzt, und daß die mechanischen Mittel einen zwischen mehreren vorgegebenen Positionen verfahrenbaren Schlitten (20; 30) umfassen, in denen dieser Schlitten jeweils mit wenigstens einem der Schalter zusammenwirken kann, um seinen Grundkontaktzustand zu verändern.

2. Vorrichtung nach Anspruch 1 , **dadurch gekennzeichnet,** daß jeder Schalter (I₁, I₂, ..., Iₙ) einen geöffneten Grundkontaktzustand besitzt und daß der Schlitten (20) mit jedem Schalter zusammenwirken kann, um ihn in einen geschlossen Kontaktzustand zu verbringen.

3. Vorrichtung nach Anspruch 2 , dadurch **gekennzeichnet,** daß jeder Schalter (I₁, I₂, ..., Iₙ) zwei in einem Abstand voneinander angeordnete Kontakte (C₁, C₂, ..., Cₙ) umfaßt und daß der Schlitten (20) wenigstens teilweise elektrisch leitend ist, um eine elektrische Verbindung zwischen den beiden Kontakten eines Schalters herzustellen, wenn er sich in der Position für das Zusammenwirken mit diesem Schalter befindet.

4. Vorrichtung nach einem der Ansprüche 2 und 3, **dadurch gekennzeichnet,** daß der Schlitten (20) eine neutrale oder inaktive Position (P₀), in der er mit keinem Schalter zusammenwirkt, und aktive Positionen (P₁, P₂, ..., Pₙ) einnehmen kann, in denen er jeweils mit einem einzigen Schalter zusammenwirkt.

5. Vorrichtung nach Anspruch 1 , **dadurch gekennzeichnet,** daß jeder Schalter (J₁, J₂, ..., Jₙ) einen geschlossen Grundkontaktzustand besitzt und daß der Schlitten (30) mit jedem Schalter zusammenwirken kann, um ihn in einen geöffneten Kontaktzustand zu verbringen.

6. Vorrichtung nach Anspruch 5 , **dadurch gekennzeichnet,** daß jeder Schalter (J₁, J₂, ..., Jₙ) zwei Kontakte (D₁, D₂, ..., Dₙ) umfaßt, die elastisch zueinander zurückgestellt werden, um den besagten geschlossenen Grundkontaktzustand zu bilden, und daß der Schlitten (30) wenigstens teilweise nichtleitend ist, um die beiden Kontakte eines Schalters zu entfernen und elektrisch zu isolieren, wenn er sich in der Position für das Zusammenwirken mit diesem Schalter befindet.

7. Vorrichtung nach Anspruch 6 , **dadurch gekennzeichnet,** daß der Schlitten (30) einen Körper mit einer länglichen Gestaltung besitzt, der sich in der Verfahrrichtung des Schlittens erstreckt, und daß dieser Schlitten eine neutrale oder inaktive Position (P₀) einnehmen kann, in der er gleichzeitig mit den jeweiligen Kontakten jedes Schalters (J₁, J₂, ..., Jₙ) zusammenwirkt, um sie in einen geöffneten Kontaktzustand zu verbringen, sowie aktive Positionen (P₁, ..., Pₙ), in denen er jeweils mit wenigstens einem der Schalter zusammenwirkt, um ihn in einen geöffneten Kontaktzustand zu verbringen, wobei er gleichzeitig wenigstens einen Schalter in einem geschlossenen Kontaktzustand beläßt.

8. Vorrichtung nach einem der Ansprüche 1 bis 7, **dadurch gekennzeichnet,** daß die Schalter (I₁, I₂, ..., Iₙ; J₁, J₂, ..., Jₙ) fluchtrecht und mit Abstand voneinander in einer Richtung angeordnet sind, die der Verfahrrichtung des Schlittens entspricht.

9. Vorrichtung nach einem der Ansprüche 1 bis 8, **dadurch gekennzeichnet,** daß sie Mittel (26; 28) für die Fernbetätigung des Schlittens (20; 30) umfaßt.

10. Vorrichtung nach Anspruch 9, **dadurch gekennzeichnet,** daß die Fernbetätigungsmittel ein Seil (26) enthalten, das gleitend in einer Hülle (62) geführt ist.

## Claims

1. Electromagnetic device having a first connection (10) connected to a voltage source (12), a second connection (14) suitable for being connected to a load (16) supplied by the said voltage source and means for controlling the intensity of the current passing through the load, these control means including a variable resistive circuit connected between the first and second connections and mechanical means suitable for varying the resistance of the resistive circuit, characterised in that the resistive circuit includes a plurality of arms (B₁, B₂, ..., Bₙ) mounted in parallel between the first connection (10) and the second connection (14) and each having a resistance (R₁, R₂, ..., Rₙ) in series with a switch (I₁, I₂, ..., Iₙ; J₁, J₂, ..., Jₙ) having an initial contact state, open or closed, and in that the mechanical means include a carriage (20; 30) movable in translation between several predetermined positions, in each of which this carriage is able to cooperate with at least one of the switches in order to change its initial contact state.

2. Device according to Claim 1, characterised in that each switch (I₁, I₂, ..., Iₙ) has an open initial contact state and in that the carriage (20) is able to cooperate with each switch to bring it to a closed contact state.

3. Device according to Claim 2, characterised in that each switch (I₁, I₂, ..., Iₙ) has two contacts (C₁, C₂, ..., Cₙ) at a distance from each other and in that the carriage (20) is at least partly electrically conductive to provide an electrical junction between the two contacts of a switch when it is in the position of cooperation with this switch.

4. Device according to one of Claims 2 and 3, characterised in that the carriage (20) is able to occupy a neutral or inactive position (P₀) in which it does not cooperate with any switch and active positions (P₁, P₂, ..., Pₙ) in each of which it cooperates on each occasion with a single switch.

5. Device according to Claim 1, characterised in that each switch (J₁, J₂, ..., Jₙ) has a closed initial contact state and in that the carriage (30) is able to cooperate with each switch in order to bring it to an open contact state.

6. Device according to Claim 5, characterised in that each switch (J₁, J₂, ..., Jₙ) has two contacts (D₁, D₂, ..., Dₙ) returned elastically towards each other to define the said closed initial contact state and in that the carriage (30) is at least partially insulating in order to move away and electrically isolate the two contacts of a switch when it is in a position of cooperation with this switch.

7. Device according to Claim 6, characterised in that the carriage (30) has a body of elongate configuration extending in the direction of translation of the carriage and in that this carriage is able to occupy a neutral or inactive position (P₀) in which it cooperates simultaneously with the respective contacts of each switch (J₁, J₂, ..., Jₙ) in order to bring them to an open contact state and active positions (P₁, ..., Pₙ) in each of which it cooperates on each occasion with at least one of the switches in order to bring it to an open contact state, while leaving at least one switch in a closed contact state.

8. Device according to one of Claims 1 to 7, characterised in that the switches (I₁, I₂, ..., Iₙ; J₁, J₂, ..., Jₙ) are disposed aligned and spaced out with respect to each other in a direction corresponding to the direction of translation of the carriage.

9. Device according to one of Claims 1 to 8, characterised in that it comprises means (26; 28) for remote control of the movement of the carriage (20; 30).

10. Device according to Claim 9, characterised in that the remote control means comprise a cable (26) sliding inside a sheath (62).
